# EUROPÄISCHE PATENTSCHRIFT

(11) **EP 1 852 676 B1**
(45) Veröffentlichungstag und Bekanntmachung des Hinweises auf die Patenterteilung: **02.11.2011**
(21) Anmeldenummer: 07107478.5
(22) Anmeldetag: 04.05.2007
(51) Int. Cl.: G01C 15/00

(54) **Vorrichtung und Verfahren zum Abbilden einer Markierung auf einer Begrenzung**
Device and method for displaying a marking on a border
Dispositif et procédé destinés à la représentation d'une marque sur une limite

(30) Priorität: 05.05.2006 DE 102006021421
(43) Veröffentlichungstag der Anmeldung: 07.11.2007
(73) Patentinhaber: Stabila Messgeräte Gustav Ullrich GmbH, 76855 Annweiler (DE)
(72) Erfinder: Kallabis, Gabriel, 76848, Spirkelbach (DE); Busam, Daniel, 76829, Godramstein (DE)
(74) Vertreter: Stoffregen, Hans-Herbert

(56) Entgegenhaltungen:
- EP-A- 1 296 163
- EP-A- 1 519 147
- DE-A1- 4 320 177
- US-A- 5 841 596
- US-A1- 2002 178 595
- US-A1- 2003 231 303

## Beschreibung

Die Erfindung bezieht sich auf eine Vorrichtung zum Abbilden einer linienförmigen optischen Markierung auf zumindest einer Begrenzung eines Raums, wie Bodenfläche, umfassend eine eine Licht- wie Laserstrahlung entlang einer optischen Achse emittierende Lichtquelle sowie eine der Lichtquelle vorgeschaltete von der optischen Achse durchsetzte die Strahlung sowohl reflektierende als auch brechende Linse quaderförmiger Geometrie mit lichtquellenseitig verlaufender Vorderseitenfläche (20) und lichtquellen abgewandt verlaufender Rückseitenfläche als Querseitenflächen, die quer zu der optischen Achse verlaufen. Ferner nimmt die Erfindung Bezug auf ein Verfahren zum Abbilden einer linienförmigen optischen Markierung auf zumindest einer Begrenzung wie Bodenfläche eines Raums durch Auffächern einer von einer Lichtquelle emittierten Licht- wie Laserstrahlung, zumindest teilweise Reflektieren und Brechen dieser an bzw. in einer optischen Linse, wobei Strahlung derart reflektiert und gebrochen wird, dass die optische Markierung vor als auch hinter der Lichtquelle abgebildet wird.

Aus der DE-A-102 17 108 ist eine Laserstrahlvorrichtung bekannt, die in der Bauindustrie zum Einsatz gelangt. Um ohne Unterbrechung eine über einen weiten Winkel verlaufende Linie zu erzeugen, ist vorgesehen, dass ein eine Kollimator-Linse durchsetzendes Laserstrahlenbündel auf eine Stablinse fällt, die lichtquellenseitig eine semitransparente Fläche aufweist, um einen linienförmigen Lichtstrahl in Richtung der Lichtquelle zu reflektieren. Das nicht reflektierte Licht durchsetzt sodann eine vollständig transparente lichtquellenabgewandte Fläche der Stablinse und wird gebrochen, um in einer zur ersten Richtung entgegengesetzten zweiten Richtung einen linienförmigen Lichtstrahl zu erzeugen.

Um eine Linie sichtbaren Lichts auf einer Fläche abzubilden, die unmittelbar vor einem die Lichtquelle aufnehmenden Gehäuse beginnt, sind nach der US-B-6 502 319 mehrere Zylinderlinsen bzw. Spiegel vorgesehen, mittels derer der von der Lichtquelle emittierte Lichtstrahl im erforderlichen Umfang aufgefächert wird.

Lichtstrahlennivelliergeräte nach dem DE-U-203 04 117 und dem DE-U-203 04 114 weisen vor einer Lichtquelle, über der ein linienförmiger Lichtstrahl erzeugt werden soll, Zeilenlinsen auf, die aus Abschnitten unterschiedlicher Brennweiten zusammengesetzt sind.

Um unterhalb einer optischen Markierungsvorrichtung auf ein Werkstück zwei sich unter einem rechten Winkel schneidenden Linien zu erzeugen, werden nach der DE-C-199 53 114 zwei seitliche nebeneinander angeordnete Projektionseinrichtungen vorgeschlagen, die jeweils eine Lichtquelle und eine in deren Strahlengang angeordnete Optik umfassen.

Um einen Lichtstrahl aufzufächern, ist nach der US-A-3 984 154 eine Linse vorgesehen, die die Form eines Hohlzylinderabschnitts aufweist, auf dessen eine Kantenfläche ein kollimierter Laserstrahl auftrifft. Damit das Licht im hinreichenden Umfang nach außen reflektiert wird, weist die Innenfläche der Linse eine reflektierende Schicht auf.

Zur Erzeugung linienförmiger Markierungen wird nach der JP-A-2004094123 eine Stablinse benutzt, deren Außenfläche abschnittsweise eine reflektierende Schicht aufweist, so dass auf diese auftreffendes Licht unmittelbar reflektiert wird. In den Bereichen, in denen eine entsprechende Reflexionsschicht nicht vorgesehen ist, kann Licht die Linse durchsetzen.

Eine Vorrichtung der eingangs genannten Art ist aus der US-B-6 935 034 bekannt. Die zum Auffächern eines Laserstrahls benutzte Linse weist eine quaderförmige Geometrie mit lichtquellenabgewandter abgerundeter Kante auf, um die gewünschte Auffächerung des die Linse durchsetzenden Lichtes zu erreichen.

Um optische Markierungen auf einem Objekt zu erzeugen, schlägt die EP-A-1 054 286 zwei in einem Strahlengang eines Lichtbündels angeordnete Umlenkeinrichtungen vor, die verschwenkbar gelagert sind.

Um ein Strahlungsfeld eines oder mehrerer Festkörperlaser zu formen und zu führen, werden nach der DE-A-195 14 626 refraktive Elemente benutzt, über die die auffallende Strahlung in eine Richtung umgelenkt bzw. gebrochen wird.

Ein Beleuchtungssystem für z. B. Motorfahrzeuge oder Gebäude nach der EP-B-0 767 393 umfasst eine transparente Platte mit Vertiefungen und Vorsprüngen in Seitenflächen, die quer zur Einfallsrichtung der Strahlung des Beleuchtungssystems verlaufen. Durch die Gestaltung der transparenten Platte wird erreicht, dass reflektierte und gebrochene Strahlung ausschließlich aus der Platte auf der der Lichtquelle abgewandten Seite austritt.

Das Dokument EP 1519147-A1 beschreibt einen optischen Strahlteiler mit einer Strahlaufweitenden diffraktiven Optik.

Zur Erzeugung von sich kreuzenden Linien auf z. B. einer Bodenfläche werden nach dem DE-U-20 2004 007 476 rinnenförmige Linsen Lichtquellen vorgeschaltet.

Der vorliegenden Erfindung liegt die Aufgabe zu Grunde, eine Vorrichtung bzw. ein Verfahren der eingangs genannten Art so weiterzubilden, dass mit konstruktiv einfachen Maßnahmen ein Auffächern und Reflektieren des von der Lichtquelle stammenden Lichtes wie Laserstrahls derart erfolgt, dass im erforderlichen Umfang vor und unmittelbar im Bereich der Lichtquelle eine optische Markierung erzeugt werden kann, die insbesondere auf einer Bodenfläche erzeugt wird, um z. B. das Ausrichten von zu verlegenden Fliesen, Bodenplatten oder sonstigen Bodenbelägen zu erleichtern.

Vorrichtungsmäßig wird die Aufgabe im Wesentlichen dadurch gelöst, dass in in der Vorderseitenfläche eine rinnenförmige Vertiefung und in der Rückseitenfläche ein Vorsprung vorgesehen sind, die geometrisch derart ausgebildet und angeordnet sind, dass auf Übergangsbereich zwischen dem Vorsprung und der Rückseitenfläche auftreffende Strahlung total reflektierbar ist, wobei total reflektierte Strahlung auf die Vertiefung auftrifft und durch diese aufgefächert wird und wobei die optische Markierung zu beiden Querseitenflächen der Linse verläuft. Ferner sollte der Vorsprung über der Querseitenfläche wie Rückseitenfläche vorstehen.

Bevorzugterweise besteht die Linse aus einem ersten und eine zweiten Abschnitt, wobei im Übergangsbereich zwischen dem ersten und dem zweiten Abschnitt der Vorsprung verläuft, der erste Abschnitt in einer Schnittebene, in der die optische Achse verläuft, eine trapezförmige Geometrie aufweist und in dem zweiten Abschnitt die rinnenförmige Vertiefung vorgesehen ist.

Um die von dem Vorsprung total reflektierte Strahlung im gewünschten Umfang in Richtung der Vorderseitenfläche zu reflektieren, ist des Weiteren vorgesehen, dass auf der den Vorsprung aufweisenden Querseitenfläche, der Rückseitenfläche, eine weitere Vertiefung vorgesehen ist, von deren vorsprungsseitig verlaufender Begrenzungsfläche Licht in Richtung der gegenüberliegenden Querseitenfläche, also der Vorderseitenfläche reflektiert wird.

Losgelöst hiervon sollte der von den Vertiefungen ausgehende zweite Abschnitt der Linse eine trapezoidförmige Geometrie mit konkav verlaufender freier äußerer Basisfläche aufweisen, die insbesondere untere Außenfläche der Linse ist.

Des Weiteren ist vorgesehen, dass äußere freie Basisflächen des ersten Abschnitts vorzugsweise als obere Außenfläche der Linse eben ausgebildet und in Wirkstellung der Linse parallel oder in etwa parallel zur Horizontalen verläuft.

Alternativ besteht die Möglichkeit, dass äußere freie Basisflächen des ersten Abschnitts vorzugsweise als obere Außenfläche der Linse aus mehreren eben verlaufenden Flächen zusammengesetzt ist, von denen zumindest eine in Wirkstellung der Linse horizontal oder im Wesentlichen horizontal verläuft.

Unabhängig hiervon sollte die Vorderseitenfläche im Bereich des ersten Abschnitts geneigt zur optischen Achse verlaufen, so dass die auftreffende Strahlung derart gebrochen wird, dass bereits eine gewünschte Auffächerung in Richtung der Rückseitenfläche erfolgt.

Des Weiteren ist vorgesehen, dass die Linse zur Lichtquelle derart ausgerichtet ist, dass die optische Achse auf den ersten Abschnitt unter einem Winkel α ≠ 90° auftrifft. Insbesondere verläuft die optische Achse zur Horizontalen unter einem Winkel β, wobei der Winkel β insbesondere beträgt 1° ≤ β ≤ 3°. Dabei sollte die optische Achse mit der Vorderseitenfläche in Bezug auf ihren von der oberen Außenfläche der Linse ausgehenden Bereich einen stumpfen Winkel einschließen.

Die Linse weist eine Breite B, eine Länge L und eine Tiefe T auf, wobei insbesondere 2 B ≤ L ≤ 3 B und/oder 2 T ≤ L ≤ 4 T und/oder 1 T ≤ B ≤ 2 T ist.

Der Vorsprung sollte im Mittenbereich der Querseitenfläche verlaufen und insbesondere im Schnitt eine Geometrie eines gleichschenkligen Dreiecks aufweisen und sich über die gesamte Breite der Querseitenfläche erstrecken. Dabei verläuft die Spitze parallel oder im Wesentlichen parallel zu der oberen bzw. zu der unteren Außenfläche, also Boden- bzw. Kopffläche der Linse.

Die den Vorsprung aufweisende Querseitenfläche besteht vorzugsweise aus einem in Wirkstellung der Linse zur Vertikalen einen Winkel δ einschließenden ersten Bereich und einem in Wirkstellung zur Vertikalen einen Winkel γ einschließenden zweiten Bereich, wobei δ < γ ist. Von dem ersten Bereich sollte sodann der Vorsprung ausgehen und der zweite Bereich über eine schräg verlaufende Stufe in den ersten Bereich übergehen.

Des Weiteren sieht die Erfindung vor, dass die Linse in Wirkstellung der Vorrichtung mit ihrer die Strahlung in Richtung der Lichtquelle zurückreflektierenden bzw. auffächernden ersten Vertiefung im Abstand A von der Begrenzung angeordnet ist, wobei 20 mm ≤ A ≤ 100 mm, insbesondere 30 mm ≤ A ≤ 70 mm beträgt.

Ein Verfahren der eingangs genannten Art zeichnet sich dadurch aus, dass eine Linse quaderförmiger Geometrie mit lichtquellenseitig verlaufender Vorderseitenfläche und lichtquellen abgewandt verlaufender Rückseitenfläche als Querseitenflächen verwendet wird, die quer zur optischen Achse der auf die Linse auftreffenden Strahlung verläuft, wobei in der Vorderseitenfläche eine rinnenförmige Vertiefung und in der Rückseitenfläche ein Vorsprung vorgesehen sind, die geometrisch derart ausgebildet und angeordnet sind, dass auf Übergangsbereich zwischen dem Vorsprung und der Querseitenfläche auftreffende Strahlung total reflektiert wird und total reflektierte und auf die Vertiefung auftreffende Strahlung aufgefächert wird. Dabei ist insbesondere vorgesehen, dass Strahlung von dem an der linsenabgewandt verlaufenden Rückseitenfläche ausgebildeten Vorsprung im Übergangsbereich zwischen einem ersten Abschnitt der Rückseitenfläche und dem Vorsprung total reflektiert wird, dass so total reflektierte Strahlung im Übergangsbereich zwischen dem Vorsprung und einem zweiten Abschnitt der Rückseitenfläche total reflektiert und aufgefächert wird und dass ein Teil der aufgefächerten Strahlung in der in der linsenseitig verlaufenden Vorderseitenfläche vorgesehenen rinnenförmigen Vertiefung weitergehend aufgefächert wird.

Der Vorsprung und die angrenzenden Bereiche der Linse sollten derart geometrisch zueinander angepasst sein, dass auf einem ersten Übergangsbereich zwischen Vorsprung und angrenzender Rückseitenfläche Strahlung in zweiten Übergangsbereich zwischen Vorsprung und angrenzender Rückseitenfläche total reflektiert und von dem zweiten Übergangsbereich in Richtung der Vorderseitenfläche total reflektiert wird. Dabei ist der Lichtstrahl auf die Linse derart ausgerichtet, dass ein Teil der Strahlung zweimal an dem Vorsprung reflektiert wird, und zwar jeweils im Übergangsbereich zwischen dem Vorsprung und dem angrenzenden Bereich der Querseitenfläche. Der zum zweiten Mal total reflektierte Strahlungsanteil wird sodann in Richtung der Vertiefung reflektiert und durch diese aufgefächert.

Des Weiteren ist vorgesehen, dass von dem Vorsprung in Richtung der Vorderseitenfläche reflektierte Strahlung sowohl in Richtung der Lichtquelle aufgefächert wird als auch von der Vorderseitenfläche in Richtung der Rückseitenfläche reflektiert und aufgefächert wird.

Durch die erfindungsgemäße Lehre ist mit konstruktiv einfachen Maßnahmen die Möglichkeit gegeben, einen linienförmigen bzw. im Querschnitt ellipsenförmigen Lichtstrahl über die Linse derart zu brechen, zu reflektieren und aufzufächern, dass eine Reflexion des Lichtes nicht nur in Richtung der von der Lichtquelle emittierten Strahlung, sondern auch zur Lichtquelle zurück erfolgt, so dass vor und zumindest unterhalb, vorzugsweise auch hinter der Lichtquelle eine optische Markierung abbildbar ist. Dabei ist zumindest im Bereich vertikaler Projektion der Lichtquelle in Richtung Standfläche der Vorrichtung die Markierung vorhanden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Prinzipdarstellung einer Vorrichtung zum Abbilden einer Markierung auf einer Begrenzungsfläche,
- Fig. 2: eine Seitenansicht einer Linse,
- Fig. 3: eine Rückansicht der Linse gemäß Fig. 2,
- Fig. 4: die Linse gemäß Fig. 2 mit prinzipieller Darstellung von durch diese gebrochener, reflektierter und aufgefächerter Strahlung und
- Fig. 5: eine Prinzipdarstellung des Strahlengangs zur Abbildung der Markierung auf eine Begrenzung.

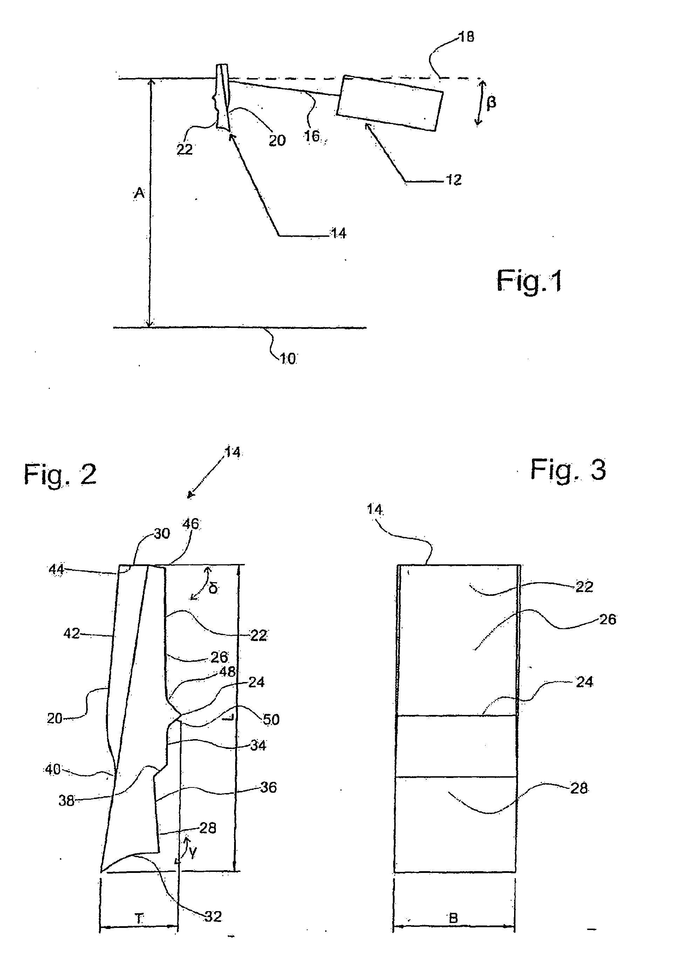

Um insbesondere im Baubereich Linien auf einer Bodenfläche 10 eines Raumes abzubilden, um zu verlegende Fliesen, Bodenplatten oder sonstige Bodenbeläge auszurichten, wird eine Vorrichtung benutzt, deren wesentlichen Bestandteile rein prinzipiell der Fig. 1 zu entnehmen sind. So umfasst die Vorrichtung eine Lichtquelle wie Laserdiode 12 mit vorgeschalteter Optik, um auf eine Linse 14 einen vorzugsweise im Querschnitt ovalen bzw. elliptischen Strahl auftreffen zu lassen, dessen optische Achse 16 geneigt zur Horizontalen 18 verläuft. Der Neigungswinkel β beträgt vorzugsweise in etwa 2°, ohne dass hierdurch eine Einschränkung der erfindungsgemäßen Lehre erfolgt.

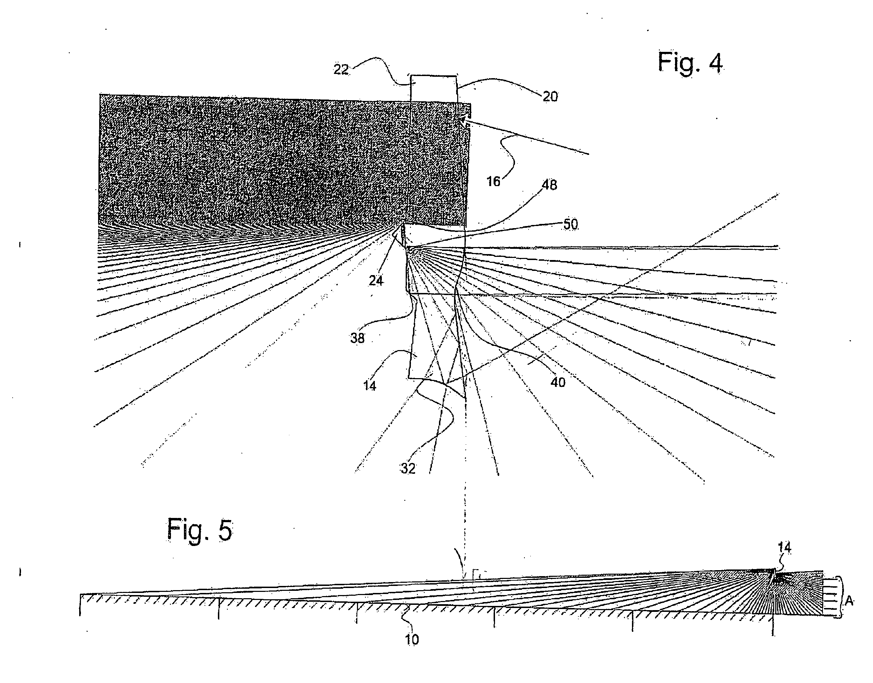

Der Laserstrahl, d. h. die optische Achse 16 trifft auf die Linse 14 in einem Abstand A zur Bodenfläche 10, der im Bereich von vorzugsweise 50 mm liegt. Die Linse 14 ist derart geometrisch ausgebildet und zu dem Laserstrahl, also zu der optischen Achse 16 ausgerichtet, dass entsprechende Darstellungen der Fig. 4 und 5 sowohl vor als auch hinter der Linse 14 und damit auch der Laserlichtquelle 12 auf dem Boden 10 eine Linie abgebildet wird. Hierzu weist die Linse 14 eine Quadergeometrie mit einer Länge L, einer Breite B und einer Tiefe T auf. Beispielhafte Abmessungen sind: 12 mm ≤ L ≤ 14 mm, 4 mm ≤ B ≤ 6 mm und 3 mm ≤ T ≤ 3,5 mm.

Die Linse 14 weist in Bezug auf die Lichtquelle 12 eine Vorderseitenfläche 20 und eine Rückseitenfläche 22 auf. Des Weiteren wird die Linse 14 durch einen über der Rückseitenfläche 22 vorstehenden und im Schnitt dreieckigen Vorsprung 24 in einen oberen ersten Abschnitt 26 und einen unteren zweiten Abschnitt 28 unterteilt. Der Vorsprung 24, der über die gesamte Breite B der Linse 14 und parallel zur oberen bzw. unteren Begrenzungsfläche (Kopffläche 30, Bodenfläche 32) verläuft, unterteilt die Linse 14 in Bezug auf deren Höhe in etwa in zwei gleiche Teile, d. h. dass die Abschnitte 24, 26 in etwa gleich lang sind. Die Rückseitenfläche 22 weist des Weiteren zwei eben verlaufende Bereiche 34, 36 auf, die über eine Stufe 38 ineinander übergehen. Dabei weist der obere Bereich 26 in Wirkstellung der Linse 14 zur Vertikalen einen Winkel δ und der untere Bereich 28 einen Winkel γ, wobei δ < γ ist.

Im Bereich der Stufe 38 verläuft auf der Vorderseitenfläche 20 eine Vertiefung 40, die eine rinnenförmige Geometrie aufweist und parallel zu dem Vorsprung 24 bzw. zu den oberen und unteren Begrenzungsflächen 30, 32 verläuft.

Der Laserstrahl, der vorzugsweise einen elliptischen Querschnitt aufweist, wobei die große Achse z. B. 3 mm bis 5 mm und die kleine Achse 1 mm bis 1,5 mm kleiner als die große Achse sein kann, fällt auf die Vorderseitenfläche 20 der Linse 14, und zwar auf den oberen ersten Abschnitt 26. Bevorzugterweise schließt die optische Achse 16 zu der Auftrefffläche 42 einen Winkel α mit α ≠ 90° ein. Dabei sollte die optische Achse 16 zu der Fläche 40, und zwar deren zur Kopffläche 30 verlaufenden Bereich einen stumpfen Winkel einschließen.

Des Weiteren ist aus der Fig. 2 erkennbar, dass sich die obere Begrenzungsfläche, also Kopffläche 30 der Linse 14 aus zwei Abschnitten 44, 46 zusammensetzt, die eben ausgebildet sind. Demgegenüber weist die untere Begrenzungsfläche, also Bodenfläche 32, einen konkaven Verlauf auf.

Durch die Geometrie der Linse 14, deren Gestaltung und Ausrichtung zur optischen Achse 16 in Wirkstellung ergeben sich eine Brechung, Reflexion und Auffächerung der auffallenden Strahlung entsprechend der Fig. 4 und 5. Die auf dem Boden 10 abgebildete Linie erstreckt sich bis 10 m vor der Linse 14. Der in Richtung der Lichtquelle 12 verlaufende Anteil der optischen Markierung weist eine Länge auf, die sich bis hinter der Lichtquelle 12 erstreckt, wie der prinzipiellen Darstellung der Fig. 5 zu entnehmen ist.

Aus der Fig. 4 ergibt sich der Verlauf der Strahlen der durch die Linse 14 gebrochenen und reflektierten und aufgefächerten Strahlung. Dabei sind sowohl der Vorsprung 24 als auch die auf der Vorderseitenfläche 20 verlaufende Vertiefung 40 wesentlich für die Ausbildung der Markierung auf der Bodenfläche 10. So wird Strahlung am jeweiligen Übergangsbereich zwischen dem Vorsprung 24 und angrenzendem Bereich der Rückseitenfläche 22 total reflektiert (Punkte 48, 50), um in Richtung der Vertiefung 40 reflektiert zu werden, in der eine weitere Auffächerung der Strahlung erfolgt. Auch wird Strahlung von der Innenfläche der Stufe 38 zurück in Richtung der Lichtquelle 12 bzw. in den Bereich unterhalb dieser reflektiert.

Ein Teil der im Bereich 50 total reflektierten Strahlung wird an der Vorderseitenfläche 20 unterhalb der Vertiefung 40 total reflektiert und durch die Bodenfläche 32 der Linse 14 gebrochen, so dass die gewünschte Auffächerung der Strahlung und somit die Abbildung der Linie auf der Bodenfläche 10 sichergestellt ist.

Wesentlich für die Abbildungen der Markierung ist auch der erste oder obere Abschnitt 26 der Linse 14 mit den sich in Richtung der Kopffläche 30 in ihrem Abstand zueinander verringernden Querseitenbegrenzungsflächen, also Vorder- und Rückseitenfläche 20, 22, die quasi Begrenzungen eines Keils sind, der die Linse 14 in den oberen und unteren Abschnitt 36 und 28 unterteilenden Vorsprung 24 auf der Rückseitenfläche 26 sowie die in dem unteren Abschnitt 28 verlaufende Vertiefung 40 in der Vorderseitenfläche 20.

## Patentansprüche

1. Vorrichtung zum Abbilden einer linienförmigen optischen Markierung auf zumindest einer Begrenzung (10) eines Raums, wie Bodenfläche, umfassend eine eine Licht- wie Laserstrabhung entlang einer optischen Achse (16) emittierende Lichtquelle (12) sowie eine der Lichtquelle vorgeschaltete von der optischen Achse durchsetzte die Strahlung sowohl reflektierende als auch brechende Linse (14) quaderförmiger Geometrie mit lichtquellenseitig verlaufender Vorderseitenfläche (20) und lichtquellen abgewandt verlaufender Rückseitenfläche (22) als Querseitenflächen, die quer zu der optischen Achse verlaufen,
**dadurch gekennzeichnet,**
**dass** in der Vorderseitenfläche (20) eine rinnenförmige Vertiefnug (40) und in der Rückseitenfläche (22) ein Vorsprung (24) vorgesehen sind,
die geometrisch derart ausgebildet und angeordnet sind, dass die auf den Übergangsbereich zwischen, dem Vorsprung, und der Rückseitenfläche auftreffende Strahlung
total reflektierbar ist, wobei die total reflektierte Strahlung auf die Vertiefung auftrifft und durch diese aufgefächert wird und wobei che optische Markierung zu beiden Querseitenflächen der Linse verläuft.

2. Vorrichtung nach Anspruch 1,
**dadurch gekennzeichnet,**
**dass** die Linse (14) aus einem ersten und einen zweiten Abschnitt (26, 28) besteht, dass im Übergangsbereich zwischen dem ersten und zweiten Abschnitt der Vorsprung (24) verläuft, dass der erste Abschnitt (26) in einer Schnittebene, in der die optische Achse (16) die Linse (14) durchsetzt, eine trapezförmige Geometrie aufweist, und dass in dem zweiten Abschnitt (28) die rinnenförmige Vertiefung (40) vorgesehen ist.

3. Vorrichtung nach Anspruch 2,
**dadurch gekennzeichnet,**
**dass** in in Bezug auf die Vertiefung (40) gegenüberliegender Querseitenfläche (22) eine weitere Vertiefung vorgesehen ist und dass von den Vertiefungen ausgehend der zweite Abschnitt (28) eine trapezoidförmige Geometrie mit konkav verlaufender freien äußeren Basisfläche (32) insbesondere als untere Außenfläche der Linse (14) aufweist.

4. Vorrichtung nach Anspruch 2,
**dadurch gekennzeichet,**
**dass** äußere freie Basisfläche (30) des ersten Abschnitts (26) vorzugsweise als obere Außenfläche der Linse (14) eben ausgebildet und insbesondere in Wirkstellung der Linse parallel oder in etwa parallel zur Horizontalen (18) verläuft .

5. Vorrichtung nach Anspruch 2, **dadurch gekennzeichnet dass** äußere freie Basisfläche (30) des ersten Abschnitts (26) vorzugsweise als obere Außenfläche der Linse (14) aus mehreren eben verlaufenden Flächen (44, 46) zusammengesetzt ist, von denen zumindest eine in Wirkstellung der Linse horizontal oder im Wesentlichen horizontal verläuft.

6. Vorrichtung nach Anspruch 2
**dadurch gekennzeichnet,**
**dass** die Vorderseitenfläche (20) im Bereich des ersten Abschnitts (26) geneigt zu der optischen Achse (16) verläuft.

7. Vorrichtung nach einem der vorhergehenden Ansprüche,
**dadurch gekennzeichnet,**
**dass** die Linse (14) derart zu der Lichtquelle (12) ausgerichtet ist, dass die optische Achse (16) auf den ersten Abschnitt (26) unter einem Winkel α ≠ 90° auftrifft, wobei insbesondere die optische Achse (16) zur Horizontalen (18) unter einem Winkel β verläuft, wobei der Winkel β insbesondere beträgt 1° ≤ β ≤ 3°.

8. Vorrichtung nach Anspruch 4 oder 5,
**dadurch gekennzeichnet,**
**dass** die optische Achse (16) mit der Vorderseitenfläche (20) in Bezug auf ihren von der oberen Außenfläche (30) der Linse (14) ausgehenden Bereich (34) einen stumpfen Winkel einschließt.

9. Vorrichtung nach einem der vorhergehenden Ansprüche,
**dadurch gekennzeichnet,**
**dass** die Linse (14) eine Breite B und eine Länge L und eine Tiefe T mit insbesondere 2 B ≤ L ≤ 3 B und/oder 2 T ≤ L ≤ 4 T und/oder 1 T ≤ B ≤ 2 T aufweist, wobei insbesondere die Linse (14) mit ihrer die Strahlung in Richtung der Lichtquelle (12) zurückreflektierender bzw. auffächernder ersten Vertiefung (40) im Abstand A zu der Begrenzung angeordnet ist, wobei 20 mm ≤ A ≤ 100 mm, insbesondere 30 mm ≤ A ≤ 70 mm ist.

10. Vorrichtung nach einem der vorhergehenden Ansprüche,
**dadurch gekennzeichnet,**
**dass** der Vorsprung (24) im Mittenbereich der Querseitenfläche (22) verläuft und vorzugsweise im Schnitt eine Geometrie eines gleichschenkligen Dreiecks aufweist und sich über die gesamte Breite der Querseitenfläche (22) erstreckt.

11. Vorrichtung nach einem der vorhergehenden Ansprüche,
**dadurch gekennzeichnet,**
**dass** die den Vorsprung (24) aufweisende Querseitenfläche (22) aus einem in Wirkstellung der Linse (14) zur Vertikalen einen Winkel δ einschließenden ersten Bereich (34) und einen in Wirkstellung der Linse zur Vertikalen einen Winkel γ einschließenden zweiten Bereich (36) besteht, dass δ < γ ist, dass von dem ersten Bereich der Vorsprung ausgebt und dass der zweite Bereich über eine schräg verlaufende Stufe (38) in den ersten Bereich übergeht.

12. Verfahren zum Abbilden einer linienförmigen optischen Markierung auf zumindest einer Begrenzung (10) wie Bodenfläche eines Raums durch Auffächern einer von einer Lichtquelle (12) emittierten Licht- wie Laserstrahlung, zumindest teilweise Reflektieren und Brechen dieser an bzw. in einer optischen Linse (14), wobei Strahlung derart reflektiert und gebrochen wird, dass die optische Markierung vor als auch hinter der Lichtquelle abgebildet wird,
**dadurch gekennzeichnet,**
**dass** eine Linse (14) quaderförmiger Geometrie mit lichtquellenseitig verlaufender Vorderseitenfläche (20) und lichtquellen abgevandt verlaufender Rückseitenfläche (22) als Querseitenflächen (20, 22) verwendet wird, die quer zur optischen Achse (16) der auf die Linse auftreffenden Strahlung verläuft, wobei in der Vorderseitenfläche eine rinnenförmige Vertiefung (40) und in der Rückseitenfläche ein Vorsprung (24) vorgesehen sind, die geometrisch derart ausgebildet und angeordnet sind, dass die auf den Übergangsbereich zwischen dem Vorsprung und der Querseitenfläche auftreffende Strahlung total reflektiert wird und die total reflektierte und auf die Vertiefung auftreffende Strahlung aufgefächert wird.

13. Verfahren nach Anspruch 12,
**dadurch gekennzeichnet,**
**dass** Strahlung von dem an der Rückseitenfläche (22) ausgebildeten Vorsprung (24) im Übergangsbereich zwischen einem ersten Abschnitt (26) der Rückseitenfläche und dem Vorsprung total reflektiert wird, dass so total reflektierte Strahlung im Übergangsbereich zwischen dem Vorsprung und einem zweiten Abschnitt (26) der Rückseitenfläche total reflektiert und aufgefächert wird und dass ein Teil der aufgefächerten Strahlung in der in der
Vorderseitenfläche (20) vorgesehenen rinnenförmigen Vertiefung (40) weitergehend aufgefächert wird.

14. Verfahren nach Anspruch 12 oder 13,
**dadurch gekennzeichnet,**
**dass** der Vorsprung (24) und die angrenzenden Bereiche der Linse (14) derart geometrisch zueinander angepasst sind, dass auf einem ersten Übergangsbereich zwischen Vorsprung und angrenzender Rückseitenfläche (22) Strahlung in zweiten Übergangsbereich zwischen Vorsprung und angrenzender Rückseitenfläche total reflektiert und von dem zweiten Übergangsbereich in Richtung der Vorderseitenfläche total reflektiert wird.

15. Verfahren nach einem der Ansprüche 12 bis 14,
**dadurch gekennzeichnet,**
**dass** die zum zweiten Mal total reflektierte Strahlung oder zumindest ein Teil dieser in Richtung der Vertiefung (40) reflektiert wird und durch diese aufgefächert wird und/oder
**dass** von dem Vorsprung (24) in Richtung der Vorderseitenfläche (20) reflektierte Strahlung sowohl in Richtung der Lichtquelle (12) aufgefächert wird als auch von der Vorderseitenfläche in Richtung der Rückseitenfläche (22) reflektiert und aufgefächert wird.

## Claims

1. Device for projecting a linear optical marking onto at least a boundary (10) of a room, such as floor surface, comprising a light source (12) that emits light radiation such as laser radiation along an optical axis (16), as well as a lens (14) having a cuboid geometry having a front surface (20) facing the light source and a rear surface (22) facing away from the light source, said surfaces are transverse lateral surfaces which run across the optical axis, said lens being connected in series with the light source and both reflecting and refracting the radiation and being penetrated by the optical axis,
**characterized in**
**that** a channel-shaped depression (40) is provided in the front surface (20) and a projection (24) in the rear surface (22), the depression and the projection being geometrically designed and arranged such that radiation striking the transitional area between the projection and the rear surface is adapted to be totally reflected, with totally reflected radiation striking the depression and being fanned out by the latter, and with the optical marking running to both transverse lateral surfaces of the lens.

2. Device according to claim 1,
**characterized in**
**that** the lens (14) consists of a first and a second section (26, 28), that the projection (24) runs in the transitional area between the first and second section, that the first section (26) has a trapezoidal geometry in a sectional plane in which the optical axis (16) penetrates the lens (14), and that the channel-shaped depression (40) is provided in the second section (28).

3. Device according to claim 2,
**characterized in**
**that** an additional depression is provided in the transverse lateral surface opposite to the depression (40), and that the second section (28) emanating from the depressions features a trapezoidal geometry with a concave running outer free base surface (32), especially constituting a lower outer surface of the lens.

4. Device according to claim 2,
**characterized in**
**that** outer free base surface (30) of the first section (26) preferably is designed flat and as upper outer surface of the lens (14) and that the outer free base surface is parallel or nearly parallel to the horizontal (18) when the lens is in operating position.

5. Device according to claim 2,
**characterized in**
**that** outer free base surface (30) of the first section (26) preferably is composed as an upper outer surface of the lens (14) of multiple planar surfaces (44, 46), of which at least one is horizontal or nearly horizontal when the lens is in operating position.

6. Device according to claim 2,
**characterized in**
**that** the front surface (20) in the region of the first section (26) runs inclined toward the optical axis (16).

7. Device according to one of the preceding claims,
**characterized in**
**that** the lens (14) is aligned with the light source (12) such that the optical axis (16) strikes the first section (26) at an angle α ≠ 90°, with the optical axis (16) running in relation to the horizontal (18) at an angle β, with the angle β being especially 1° ≤ β ≤ 3°.

8. Device according to claim 4 or 5,
**characterized in**
**that** the optical axis (16) with the front surface (20) relative to its area (34) emanating from the upper outer surface (30) of the lens (14) includes an obtuse angle.

9. Device according to one of the preceding claims,
**characterized in**
**that** the lens (14) has a width B, a length L and a depth T, especially with 2 B ≤ L ≤ 3 B and/or 2 T ≤ L ≤ 4 T and/or 1 T ≤ B ≤ 2 T, with especially the lens (14) being arranged with its first depression (40) spaced from the boundary at a distance A, where 20 mm ≤ A ≤ 100 mm, especially 30 mm ≤ A ≤ 70 mm, said depression reflecting the radiation back toward the light source (12), respectively fanning the radiation.

10. Device according to one of the preceding claims,
**characterized in**
**that** the projection (24) runs in the center of the transverse lateral surface (22) and in section preferably has a geometry of an isosceles triangle and extends over the entire width of the transverse surface (22).

11. Device according to one of the preceding claims,
**characterized in**
**that** the transverse lateral surface (22) with the projection (24) consists of a first area (34) having an angle δ to the vertical when the lens (14) is in an operating position and of a second area (36) having an angle γ to the vertical axis when the lens is in operating position, where β < γ, that the projection emanates from the first area, and that the second area merges with the first area via a diagonally running step (38).

12. Method for projecting a linear optical marking onto at least a boundary (10) of a room, such as floor surface, by fanning light radiation such as laser radiation emitted from a light source (12), at least partly reflecting and refracting the radiation at or in an optical lens (14), the radiation being reflected and refracted in such a way that the optical marking is projected both in front of and behind the light source,
**characterized in**
**that** a lens with cuboid geometry with a front surface (20) facing the light source as well as a rear surface (22) facing away from the light source as transverse lateral surfaces (20, 22) is used, said lens running across the optical axis (16) of the radiation striking the lens, with a channel-shaped depression being provided in the front surface and a projection (24) in the rear surface, which are geometrically designed and arranged such that the radiation striking the transitional area between the projection and the transverse lateral surface is totally reflected, and totally reflected radiation striking the depression is fanned out.

13. Method according to claim 12,
**characterized in**
**that** radiation is totally reflected by the projection (24) designed on the rear surface (22) in the transitional area between a first section (26) of the rear surface and the projection, that radiation thus reflected being totally reflected and fanned in the transitional area between the projection and a second section (26) of the rear surface and that a portion of the fanned radiation is further fanned in the channel-shaped depression provided in the front surface (20).

14. Method according to claim 12 or 13,
**characterized in**
**that** the projection (24) and the adjacent areas of the lens (14) are geometrically adapted to one another such that radiation is totally reflected on a first transitional area between the projection and adjacent rear surface (22) into a second transitional area between projection and adjacent rear surface, and is totally reflected by the second transitional area toward the front surface.

15. Method according to one of claims 12 to 14,
**characterized in**
**that** the radiation totally reflected for the second time or at least a portion of it is reflected towards the depression (40), and is then fanned out by the latter, and/or that radiation reflected by the projection (24) toward the front surface (20) is both fanned towards the light source (12) and reflected and fanned by the front surface towards the rear surface (22).

## Revendications

1. Dispositif destiné à reproduire un marquage visuel linéaire sur au moins une délimitation (10) d'un local, telle que la surface du plancher, comprenant une source lumineuse (12) émettant un rayon lumineux, tel qu'un rayon laser, le long d'un axe optique (16), ainsi qu'une lentille (14) traversée par l'axe optique, placée devant la source lumineuse et réfléchissant aussi bien que réfractant le rayon, et présentant une forme parallélépipédique avec une face avant (20) s'étendant du côté de la source lumineuse et une face arrière (22) s'étendant du côté opposé à la source lumineuse, en tant que faces transversales qui s'étendent transversalement par rapport à l'axe optique,
**caractérisé en ce**
**que** sont prévus dans la face avant (20) un évidement (40) en forme de goulotte et dans la face arrière (22) une saillie (24) qui sont géométriquement conçus et disposés de manière telle que le rayon incident sur la zone de transition entre la saillie et la face arrière peut être totalement réfléchi, sachant que le rayon totalement réfléchi est incident sur l'évidement et étalé par celui-ci, et que le marquage visuel s'étend vers les deux faces transversales de la lentille.

2. Dispositif selon la revendication 1,
**caractérisé en ce**
**que** la lentille (14) est constituée d'une première et d'une seconde parties (26, 28), que la saillie (24) s'étend dans la zone de transition entre la première et la seconde parties, que la première partie (26) a une forme trapézoïdale dans un plan sécant dans lequel l'axe optique (16) traverse la lentille (14), et que l'évidement en forme de goulotte (40) est prévu dans la seconde partie (28).

3. Dispositif selon la revendication 2,
**caractérisé en ce**
**que** dans la face transversale (22) opposée à l'évidement (40) est prévu un autre évidement et qu'en partant des évidements, la seconde partie (28) présente une forme trapézoïdale avec une face de base (32) extérieure libre concave, en particulier en tant que face de base extérieure inférieure de la lentille (14).

4. Dispositif selon la revendication 2,
**caractérisé en ce**
**que** la face de base (30) extérieure libre de la première partie (26) est de préférence conçue plane en tant que surface extérieure supérieure de la lentille (14) et en particulier s'étend parallèlement ou quasiment parallèlement à l'horizontale (18) dans la position de fonctionnement de la lentille.

5. Dispositif selon la revendication 2,
**caractérisé en ce**
**que** la face de base (30) extérieure libre de la première partie (26), en tant que surface extérieure supérieure de la lentille (14), est de préférence composée de plusieurs faces planes (44, 46) dont au moins une est horizontale ou quasiment horizontale dans la position de fonctionnement de la lentille.

6. Dispositif selon la revendication 2,
**caractérisé en ce**
**que** la face avant (20) est inclinée par rapport à l'axe optique (16) dans la zone de la première partie (26).

7. Dispositif selon l'une des revendications précédentes,
**caractérisé en ce**
**que** la lentille (14) est orientée par rapport à la source lumineuse (12) de manière telle que l'axe optique (16) est incident sur la première partie (26) sous un angle α ≠ 90°, sachant qu'en particulier l'axe optique (16) s'étend en formant un angle β avec l'horizontale (18), et qu'en particulier, l'angle β est tel que 1° ≤ β ≤ 3°.

8. Dispositif selon la revendication 4 ou 5,
**caractérisé en ce**
**que** l'axe optique (16) inclut avec la face avant (20) un angle obtus par rapport à sa zone (34) partant de la face extérieur supérieure (30) de la lentille (14).

9. Dispositif selon l'une des revendications précédentes,
**caractérisé en ce**
**que** la lentille (14) présente une largeur B, une longueur L et une profondeur T telles qu'en particulier 2 B ≤ L ≤ 3 B et/ou 2 T ≤ L ≤ 4 T et/ou 1 T ≤ B ≤ 2 T, sachant qu'avec son premier évidement (40) réfléchissant le rayon en direction de la source lumineuse (12) ou l'étalant, la lentille (14) est en particulier placée à une distance A de la délimitation, A étant telle que 20 mm ≤ A ≤ 100 mm, en particulier 30 mm ≤ A ≤ 70 mm.

10. Dispositif selon l'une des revendications précédentes,
**caractérisé en ce**
**que** la saillie (24) s'étend dans la zone médiane de la face transversale (22) et présente de préférence en section la forme d'un triangle isocèle et s'étend sur toute la largeur de la face transversale (22).

11. Dispositif selon l'une des revendications précédentes,
**caractérisé en ce**
**que** la face transversale (22) présentant la saillie (24) est constituée d'une première zone (34) incluant un angle δ avec la verticale en position de fonctionnement de la lentille (14), et d'une seconde zone (36) incluant un angle γ avec la verticale en position de fonctionnement de la lentille, que δ < γ, que la saillie part de la première zone et que la seconde zone se raccorde à la première zone par l'intermédiaire d'un palier incliné (38).

12. Procédé destiné à reproduire un marquage visuel linéaire sur au moins une délimitation (10), telle que la surface du plancher d'un local, par étalement d'un rayon lumineux, tel qu'un rayon laser, émis par une source lumineuse (12), par réflexion et réfraction au moins partielles dudit rayon sur ou dans une lentille optique (14), le rayon étant réfléchi et réfracté de manière telle que le marquage est reproduit devant ainsi que derrière la source lumineuse,
**caractérisé en ce**
**qu'**est utilisée une lentille (14) s'étendant transversalement par rapport à l'axe optique (16) du rayon incident sur la lentille, et qui a une forme parallélépipédique avec une face avant (20) s'étendant du côté de la source lumineuse et une face arrière (22) s'étendant du côté opposé à la source lumineuse en tant que faces transversales (20, 22), sachant que sont prévus dans la face avant (20) un évidement (40) en forme de goulotte et dans la face arrière (22) une saillie (24), qui sont géométriquement conçus et disposés de manière telle que le rayon incident sur la zone de transition entre la saillie et la face transversale est totalement réfléchi, et que le rayon totalement réfléchi et incident sur l'évidement est étalé.

13. Procédé selon la revendication 12,
**caractérisé en ce**
**que** le rayon est totalement réfléchi par la saillie (24) formée sur la face arrière (22) dans la zone de transition entre une première partie (26) de la face arrière et la saillie, que le rayon ainsi totalement réfléchi est totalement réfléchi et étalé dans la zone de transition entre la saillie et une seconde partie (26) de la face arrière, et qu'une partie du rayon étalé est encore plus étalée dans l'évidement (40) en forme de goulotte prévu dans la face avant (20).

14. Procédé selon la revendication 12 ou 13,
**caractérisé en ce**
**que** la saillie (24) et les zones voisines de la lentille (14) sont géométriquement ajustées entre elles de manière telle que sur une première zone de transition entre la saillie et la face arrière (22) voisine, le rayon est totalement réfléchi dans la deuxième zone de transition entre la saillie et la face arrière voisine, et est totalement réfléchi par la deuxième zone de transition en direction de la face avant.

15. Procédé selon l'une des revendications 12 à 14,
**caractérisé en ce**
**que** le rayon totalement réfléchi pour la deuxième fois ou au moins une partie de celui-ci est réfléchi(e) en direction de l'évidement (40), et étalé(e) par ce dernier et/ou
**que** le rayon réfléchi par la saillie (24) en direction de la face avant (20) est à la fois étalé en direction de la source lumineuse (12) et réfléchi et étalé par la face avant en direction de la face arrière (22).
